## Europäisches Patentamt

## European Patent Office

## Office européen des brevets

(19)

(11) **EP 0 630 920 B1**

(12)

# EUROPÄISCHE PATENTSCHRIFT

(45) Veröffentlichungstag und Bekanntmachung des Hinweises auf die Patenterteilung:
**02.04.1997 Patentblatt 1997/14**

(51) Int Cl.$^6$: **C08F 220/14**, C04B 24/26

(21) Anmeldenummer: **94107430.4**

(22) Anmeldetag: **13.05.1994**

(54) **Polymerisatpulver**

Powdery polymer

Polymère en poudre

(84) Benannte Vertragsstaaten:
**AT BE CH DE DK ES FR GB IT LI NL SE**

(30) Priorität: **21.05.1993 DE 4317036**

(43) Veröffentlichungstag der Anmeldung:
**28.12.1994 Patentblatt 1994/52**

(73) Patentinhaber: **BASF Aktiengesellschaft
67063 Ludwigshafen (DE)**

(72) Erfinder:
- **Beckerle, Wilhelm Friedrich
  D-67240 Bobenheim-Roxheim (DE)**
- **Schwartz, Manfred, Dr.
  D-67063 Ludwigshafen (DE)**
- **Dotzauer, Bernhard, Dr.
  D-67133 Maxdorf (DE)**
- **Angel, Maximilian, Dr.
  D-67105 Schifferstadt (DE)**

(56) Entgegenhaltungen:
**EP-A- 0 043 911**      **EP-A- 0 262 326**
**FR-A- 2 377 426**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft Polymerisatpulver, deren Polymerisat in polymerisierter Form aus

60 bis 85 Gew.-%         Methylmethacrylat (Monomeres a),

15 bis 25 Gew.-%         wenigstens einer 3 bis 6 C-Atome aufweisenden $\alpha,\beta$-monoethylenisch gesättigten Carbonsäure (Monomere b) und

0 bis 15 Gew.-%          sonstigen copolymerisierbaren nomeren (Monomere c)

mit der Maßgabe aufgebaut ist, daß

- die Zusammensetzung der Monomeren a, b und c so gewählt ist, daß nach der Beziehung von Fox für ein aus diesen Monomeren aufgebautes Polymerisat eine Glasübergangstemperatur von 70 bis 150°C resultiert und

- der K-Wert des Polymerisats, bestimmt in vollsaurer Form des Polymerisats in Dimethylformamid bei 23°C und einem Polymerisatgehalt von 0,1 Gew.-%, 45 bis 100 beträgt.

Ferner betrifft die vorliegende Erfindung Verfahren zur Herstellung dieser Polymerisatpulver sowie deren Verwendung, in trockener oder in wäßriger Form, als satzmittel in Zement enthaltenden mineralischen baustoffen.

Als mineralische Bindebaustoffe werden Zubereitungen zusammengefaßt, die als wesentliche Bestandteile mineralische Bindemittel wie Zement, Kalk oder Gips sowie als Zuschläge dienende Sande, Kiese, gebrochene Gesteine oder sonstige Füllstoffe wie z.B. Pigmente sowie natürliche oder synthetische Fasern enthalten und die nach dem Anmachen mit Wasser an der Luft, teilweise auch unter Wasser, erstarren und erhärten (verfestigen).

In vielen Fällen ist es nun erwünscht, daß der gebrauchsfertig angemachte mineralische Bindebaustoff einerseits ein vorteilhaftes Fließverhalten, d.h. eine erhöhte Fließgrenze (als Fließgrenze wird diejenige Schubspannung bezeichnet, oberhalb derer sich ein Werkstoff wie eine Flüssigkeit verhält, d.h. fließt, während er sich bei Einwirkung von unterhalb der Fließgrenze liegenden Schubspannungen wie ein Feststoff verhält, d.h. nicht fließt) sowie unter der Einwirkung von Schubspannungen oberhalb der Fließgrenze einen möglichst geringen Fließwiderstand, eine möglichst geringe dynamische Viskosität, und der verfestigte mineralische Bindebaustoff andererseits eine erhöhte innere Festigkeit (Biegezug- und Druckfestigkeit) und eine erhöhte Haftung auf dem Untergrund aufweist.

Ein Beispiel für ein derartiges Anforderungsprofil sind Reparaturmörtel. Sie sollen im gebrauchsfertig angemachten Zustand zwar eine verarbeitungsgerechte Viskosität aufweisen, unmittelbar nach dem Aufbringen auf die meist vertikal ausgerichtete Reparaturstelle unter der Schubspannung ihres Eigengewichtes aber nicht abfließen, d.h. Standfestigkeit zeigen. Außerdem sollen sie im verfestigten Zustand auf dem auszubessernden Untergrund gut haften und eine hohe mechanische Festigkeit gewährleisten.

Ein weiteres Beispiel für ein obengenanntes Anforderungsprofil sind Klebemörtel zum Anbringen keramischer Fliesen.

Es ist nun allgemein bekannt, die Eigenschaften mineralischer Bindebaustoffe durch Zusatz wäßriger satdispersionen (in wäßriger oder getrockneter Form) zu modifizieren. In der Regel geht damit jedoch eine Verlängerung der Zeit einher, die erforderlich ist, bis der mineralische Bindebaustoff seine gebrauchsfähige Festigkeit erreicht.

Die Aufgabe der vorliegenden Erfindung bestand daher darin, Polymerisatpulver zur Verfügung zu stellen, die bei Zusatz (in trockener oder wäßriger Form) zu Zement enthaltenden mineralischen Bindebaustoffen im frisch angemachten Zustand ein vorteilhaftes Fließverhalten derselben bedingen, ohne die Verfestigungsdauer bis zur gebrauchsfähigen Festigkeit wesentlich zu beeinflußen, und die gleichzeitig die mechanische Festigkeit und die Haftung auf dem Untergrund verbessern.

Demgemäß wurden die eingangs definierten Polymerisatgefunden.

Der K-Wert ist eine relative Viskositätszahl, die in Analogie zur DIN 53 726 bestimmt wird. Er beinhaltet die Fließgeschwindigkeit von reinem Dimethylformamid (DMF) relativ zur Fließgeschwindigkeit von 0,1 Gew.-% Polymerisat (hier in seiner vollsauren Form) enthaltendem DMF (bezogen auf das Gesamtgewicht) und charakterisiert das mittlere Molekulargewicht des Polymerisats (vgl. dazu Cellulosechemie, Vol. 13 (1932), S. 58-64, und Kirk-Othmer, Encyclopedia of Chemical Technology, Vol.23, S. 967-968). Ein hoher K-Wert entspricht einem hohen mittleren Molekulargewicht.

Nach Fox (T.G. Fox, Bull. Am. Phys. Soc. (Ser. II) $\underline{1}$, 123 (1956)) gilt für die Glasübergangstemperatur von Mischpolymerisaten in guter Nährung

$$\frac{1}{Tg} = \frac{X^1}{Tg^1} + \frac{X^2}{Tg^2} + \dots\dots \frac{X^n}{Tg^n} \, ,$$

wobei $X^1$, $X^2$, ...., $X^n$ die Massenbrüche der Monomeren 1, 2, ..., n und $Tg^1$, $Tg^2$, ..., $Tg^n$ die Glasübergangstemperaturen der jeweils nur aus einem der Monomeren 1, 2, ... oder n aufgebauten Polymerisate in Grad Kelvin bedeuten.

Die Glasübergangstemperaturen dieser Homopolymerisate der Monomeren a, b, c sind bekannt und z.B. in J. Brandrup, E.H. Immergut, Polymer Handbook 1st Ed. J. Wiley, New York 1966 und 2nd Ed. J. Wiley, New York 1975, aufgeführt. Insbesondere sind die Glasübergangstemperaturen der Homopolymerisate der Monomeren a und b aus Ullmann's Encyclopedia of Industrial Chemistry, Verlag Chemie, Weinheim (1992), Vol. A21, Tab. 8, S. 169, zu entnehmen. Vorzugsweise errechnet sich nach Fox für die erfindungsgemäß zu polymerisierenden Monomerengemische eine Glasübergangstemperatur von 90 bis 130°C.

Aus J. Appl. Polymer Science, Vol. 11 (1970), S. 897-909 und S. 911-928, sind wäßrige Polymerisatdispersionen bekannt, die durch radikalische Emulsionspolymerisation von Monomerengemischen bestehend aus 80 Gew.-% Methylmethacrylat und 20 Gew.-% Methacrylsäure erhalten worden sind. Da eine Mitverwendung von das Molekulargewicht regelnden Substanzen nicht erwähnt wird, liegt der K-Wert dieser Emulsionspolymerisate im Bereich von 40 bis 60.

Die EP-A 262 326 und die EP-A 332 067 betreffen Verfahren zur Herstellung eines redispergierbaren Polymerisatpulvers durch Eintrocknen einer Polymerisatdispersion, enthaltend ein dispergiertes Polymerisat mit einer dynamischen Einfriertemperatur $T_{\lambda max}$ von 60 bis 150°C, das aus 20 bis 60 Gew.-% Acryl- und/oder Methacrylsäure und 40 bis 80 Gew.-% niederer Alkylester der Acryl- und/oder Methacrylsäure oder deren Gemisch mit Styrol sowie gegebenenfalls weiterer Comonomeren aufgebaut ist, nach speziellen Sprühtrocknungsverfahren. Sie empfehlen, die redispergierten Polymerisatpulver zur Herstellung von Arzneimittelüberzügen zu verwenden.

In den Schriften DE-AS 16 69 903, BE-A 8 454 499, JP-A 54/43285, US-A 4 225 496, DE-A 32 20 384, DE-A 28 37 898, US-A 3 232 899 und JP-A 91/131 533 werden wäßrige Polymerisatdispersionen von $\alpha,\beta$-monoethylenisch ungesättigten Carbonsäuren einpolymerisiert enthaltenden Emulsionspolymerisaten als Additive in Zement enthaltenden mineralischen Bindebaustoffen empfohlen. Diese Emulsionspolymerisate vermögen jedoch aufgrund ihrer zu tief liegenden Glasübergangstemperatur und/oder ihres zu hoch bzw. zu tief liegenden Anteils an einpolymerisierten $\alpha,\beta$-monoethylenisch ungesättigten Carbonsäuren die dieser Erfindung zugrunde liegende Aufgabe nicht in voll befriedigender Weise zu lösen.

Die EP-A 537 411 empfiehlt die generelle Verwendung von Polymerisatdispersionen von Polymerisaten, die eine erhöhte Tg aufweisen als Additiv in Zementmörtel. Zur Lösung der dieser Erfindung zugrunde liegenden Aufgabe ist die Eigenschaft einer erhöhten Glasübergangstemperatur des dispergierten Polymerisats jedoch nicht ausreichend.

Die DE-A 39 07 013 betrifft wäßrige Polymerisatdispersionen, deren Emulsionspolymerisate aus 60 bis 95 Gew.-% Methylmethacrylat, 5 bis 40 Gew.-% Acryl- und/oder Methacrylsäure und gegebenenfalls sonstigen Comonomeren mit der Maßgabe aufgebaut sind, daß ihre Glasübergangstemperatur 60 bis 125°C beträgt. Diese wäßrigen Polymerisatdispersionen werden als Bindemittel für Formkörper empfohlen. Als zahlenmittleres Molekulargewicht der Emulsionspolymerisate ist der Bereich $5\cdot10^3$ bis $5\cdot10^6$, bevorzugt $2\cdot10^5$ bis $2\cdot10^6$ angegeben, und die bevorzugte Monomerenzusammensetzung lautet 60 bis 75 Gew.-% Methylmethacrylat, 5 bis 30 Gew.-% Methacrylsäure und 0 bis 10 Gew.-% Acrylsäure.

Erfindungsgemäß werden als Monomere b, deren Anteil, aufs Polymerisat bezogen, vorzugsweise 20 bis 25 Gew.-% beträgt, Acryl- und Methacrylsäure bevorzugt. Vorzugsweise umfaßt die Gesamtmenge der im Polymerisat in polymerisierter Form enthaltenen Monomeren b daher wenigstens 50 Gew.-% wenigstens eines dieser beiden Monomeren. Mit besonderem Vorteil umfassen die Monomeren b ausschließlich Methacrylsäure.

Als Monomere c eignen sich vinylaromatische Monomere wie Styrol oder Vinyltoluole, Nitrile von 3 bis 6 C-Atome aufweisenden $\alpha,\beta$-monoethylenisch ungesättigten Carbonsäuren, von Methylmethacrylat verschiedene Ester aus 3 bis 6 C-Atome aufweisenden $\alpha,\beta$-monoethylenisch ungesättigten Carbonsäuren und 1 bis 12 C-Atome aufweisenden Alkanolen, Amide, die substituiert sein können, von 3 bis 6 C-Atome aufweisenden $\alpha,\beta$-monoethylenisch ungesättigten Carbonsäuren, aber auch Monomere mit einer polaren Struktur wie Acrylamidopropansulfonsäure, Vinylpyrrolidon, Hydroxyethylacrylat oder quaternäres Vinylimidazol. Vorzugsweise enthält das erfindungsgemäße Polymerisat höchstens 5 Gew.-% an Monomeren c polymerisiert und mit besonderem Vorteil ist es frei von Monomeren c.

Mit besonderem Vorteil ist das erfindungsgemäße Polymerisat daher in polymerisierter Form wie folgt aufgebaut:

70 bis 85 Gew.-% Methylmethacrylat und

15 bis 25 Gew.-% Methacrylsäure.

Die Herstellung der erfindungsgemäßen Polymerisatpulver kann z.B. dadurch erfolgen, daß man ein Monomerengemisch entsprechender Zusammensetzung in an sich bekannter Weise nach dem Verfahren der radikalischen wäßrigen Emulsionspolymerisation, d.h. in der Regel in Gegenwart von Dispergiermitteln und radikalischen Polymerisationsinitiatoren, polymerisiert und die resultierende wäßrige Polymerisatdispersion anschließend trocknet. Erfolgt die radikalische wäßrige Emulsionspolymerisation unter Ausschluß von Molekulargewichtsreglern, liegen die resultierenden mittleren Molekulargewichte bei Verwendung üblicher Mengen an Polymerisationsinitiatoren, normalerweise 0,3 bis 2 Gew.-% bezogen auf die zu polymerisierenden Monomeren, üblicherweise regelmäßig im erfindungsgemäßen K-Wertebereich, der vorzugsweise 50 bis 80 beträgt. Die Polymerisationstemperatur liegt im allgemeinen zwischen Raumtemperatur und 100°C, vorzugsweise bei Temperaturen von 60 bis 90°C.

Als radikalische Polymerisationsinitiatoren kommen alle diejenigen in Betracht, die in der Lage sind, im genannten Temperaturbereich eine radikalische wäßrige Emulsionspolymerisation auszulösen. Es kann sich dabei sowohl um Peroxide, z.B. Alkalimetallperoxidisulfate (insbesondere Natriumperoxidisulfat) als auch um Azoverbindungen handeln.

Als Dispergiermittel kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Bevorzugt werden die wäßrigen Polymerisatdispersionen ohne Mitverwendung von Schutzkolloiden hergestellt. D.h. vorzugsweise werden als Dispergiermittel ausschließlich Emulgatoren eingesetzt, deren relative Molekulargewichte im Unterschied zu den Schutzkolloiden üblicherweiseunter 1000 liegen. Sie sind vorzugsweise anionischer und/oder nichtionischer Natur. Gebräuchliche Emulgatoren sind z.B. ethoxylierte Mono-, Di- und TriAlkylphenole (EO-Grad: 3 bis 50, Alkylrest: $C_4$ bis $C_9$), ethoxylierte Fettalkohole (EO-Grad: 0 bis 50, Alkylrest: $C_8$ bis $C_{36}$) sowie Alkali- und Ammoniumsalze von Alkylsulfaten (Alkylrest: $C_8$ bis $C_{12}$), von Schwefelsäurehalbestern ethoxylierter Alkylphenole (EO-Grad: 3 bis 50, Alkylrest: $C_4$ bis $C_{15}$) und, besonders bevorzugt, ethoxylierter Alkanole (EO-Grad: 0 bis 30, Alkylrest: $C_{10}$ bis $C_{18}$). Bezogen auf die Menge der zu polymerisierenden Monomeren werden üblicherweise 0,5 bis 3 Gew.-% angewendet.

Vorzugsweise erfolgt die Emulsionspolymerisation so, daß man einen Teil der Dispergiermittel (bis zu 10 Gew.-% bezogen auf deren eingesetzte Gesamtmenge) und einen Teil des Polymerisationsinitiators (bis zu 20 Gew.-% bezogen auf die erforderliche Gesamtmenge) in wäßriger Phase vorlegt, die Vorlage auf die Polymerisationstemperatur erhitzt und anschließend unter Aufrechterhaltungder Polymerisationstemperatur die zu polymerisierenden Monomeren, in wäßriger Phase voremulgiert, sowie dazu synchron eine wäßrige Lösung der Restmenge an Polymerisationsinitiator dem Polymerisationsgefäß kontinuierlich zuführt (in der Regel innerhalb weniger Stunden). Nach Abschluß der Monomeren- und Initiatorzufuhr wird normalerweise unter Aufrechterhaltung der Polymerisationstemperatur noch eine bis zwei Stunden nachpolymerisiert. Üblicherweise werden die wäßrigen Polymerisatdispersionen mit einem Feststoffgehalt von 10 bis 30 Gew.-% erzeugt. Der Polymerisationsumsatz beträgt in der Regel wenigstens 99,8 Gew.-%.

Zur Überführung der wäßrigen Polymerisatdispersionen in Polymerisatpulver können beispielsweise nachfolgende Verfahren angewendet werden:

- Sprühtrocknung der wäßrigen Polymerisatdispersion,
- Gefriertrocknung der wäßrigen Polymerisatdispersion.

Ein anderes mögliches Verfahren zur Herstellung der erfindungsgemäßen Polymerisatpulver umfaßt das Polymerisieren der entsprechenden Monomeren nach der Methode der radikalischen Suspensionspolymerisation und anschließendes Mahlen des Suspensionspolymerisats.

Als besonders zweckmäßig erweist sich die Sprühtrocknung der wäßrigen Polymerisatdispersion, wobei an sich bekannte Antiback- und Sprühhilfsmittel mitverwendet werden können. Von besonderem Vorteil ist jedoch, daß die erfindungsgemäßen wäßrigen Polymerisatdispersionen nach der Methode der EP-A 262 326 bzw. EP-A 332 067 auch ohne Mitverwendung von Sprühhilfsmitteln als in alkalischem wäßrigem Medium redispergierbare Polymerisate erhältlich sind. Selbstverständlich können die erfindungsgemäßen Polymerisate saure Funktionen aufweisende Monomere (z.B. die Monomeren b) in neutralisierter Form (z.B. mit Alkalimetallhydroxid oder Ammoniak bzw. Aminen) einpolymerisiert enthalten. Die Neutralisation kann z.B. unmittelbar vor Sprühtrocknung erfolgen. Saure Monomere b, c können aber auch bereits in neutralisierter Form zur Polymerisation eingesetzt werden.

Von besonderer Bedeutung ist, daß die gemäß obengenannten Herstellverfahren zu erzeugenden erfindungsgemäßen Polymerisatpulver in alkalischem wäßrigem Medium redispergierbar sind.

Da die übliche Verkaufsform mineralischer Bindebaustoffe deren Trockengemisch ist, das traditionell das mineralische Bindemittel sowie die Zuschläge umfaßt, ist die erfindungsgemäße Pulverform von besonderer Bedeutung, ermöglicht sie doch die erfindungsgemäße fizierung in Gestalt einer verkaufsüblichen Trockenmischung, die nach dem Anmachen mit Wasser unmittelbar gebrauchsfertig ist. Selbstverständlich ist die Gebrauchsform der polymerisatmodifizierten mineralischen Bindebaustoffe aber auch dadurch erhältlich, daß man die erfindungsgemäßen Polymerisate unmittelbar als wäßrige Polymerisatdispersion zusetzt (dies kann sowohl die wäßrige Polymerisatausgangsdispersion als auch die wäßrige Dispersion des redispergierten Polymerisatpulvers sein).

Die erfindungsgemäßen Polymerisatpulver eignen sich insbesondere als Additiv in Zement enthaltenden mineralischen Bindebaustoffen. Vorzugsweise umfaßt das den mineralischen Bindebaustoffen zugrunde liegende mineralische Bindemittel wenigstens 50 % seines Gewichtes an Zement. In besonders vorteilhafter Weise tritt die erfindungsgemäße Wirkung bei Verwendung von minderalischen Bindemitteln aus

70 bis 100 Gew.-% Zement und
0 bis 30 Gew.-% Gips

ein. Als ganz besonders vorteilhaft erweist sich die erfindungsgemäße Anwendung in mineralischen Bindebau stoffen, denen als mineralischer Binder ausschließlich Zement zugrunde liegt. Die erfindungsgemäße Wirkung ist von der Zementart weitgehend unabhängig. Ja nach Vorhaben können beispielsweise Hochofenzement, Ölschieferzement, Portlandzement, hydrophobierter Portlandzement, Schnellzement, Quellzement oder Tonerdezement verwendet werden, wobei sich die Verwendung von Portlandzement als besonders günstig erweist.

Insbesondere eignen sich die erfindungsgemäßen Polymerisatpulver als Additiv in Reparaturmörteln. Deren Trokkenzusammensetzung gestaltet sich in der Regel wie folgt:

- 20 bis 60 Gew.-% mineralisches Bindemittel (vorzugsweise ausschließlich Zement),

- bezogen auf die Menge des mineralischen Bindemittels 1 bis 20 (vorzugsweise 2 bis 10) Gew.-% erfindungsgemäßes Polymerisat,

- 0 bis 5 Gew.-% an sich übliche Hilfsmittel (z.B. Entschäumer) und als Restmenge

- Sand, üblicherweise in einer Körnung von 0,05 bis 3 mm.

Die Gebrauchsform ist daraus erhältlich durch Wasserzusatz bis zur gewünschten Konsistenz. Letztere ist normalerweise bei einem Wasser mineralischen Bindemittel (Zement)-Gewichtsverhältnis von 0,3 bis 0,6 gegeben.

Bei zubereitungsgerechter Viskosität erweisen sich so angemachte Reparaturmörtel als standfest und nach Verfestigung zeigen sie erhöhte Haft-, Biege- und Druckfestigkeit.

Beispiele

1. Herstellung wäßriger Polymerisatdispersionen Da bis De

Da:   Ein Gemisch bestehend aus

220 g   Wasser
0,5 g   einer 28 gew.-%igen wäßrigen Lösung des Natriumsalzes eines Gemisches aus Schwefelsäurehalbestern von ethoxylierten $C_{12}/C_{14}$-Fettalkoholen (EO-Grad: 2,8) = Emulgatorlösung i und
20 g   Zulauf I wurde auf 85°C erhitzt und unter Aufrechterhaltung der 85°C zeitgleich beginnend während 2 h mit der Restmenge des Zulaufs I und dazu synchron mit Zulauf II kontinuierlich versetzt. Anschließend wurde noch 1 h bei 85°C gerührt.

Zulauf 1:      3 g Natriumperoxidisulfat in 100 g Wasser;

Zulauf 2:      240 g Methylmethacrylat,
60 g Methacrylsäure,
15,6 g Emulgatorlösung i und
391 g Wasser.

Der K-Wert des resultierenden Emulsionspolymerisats betrug 66.

Db:      Wie Da, Zulauf II enthält jedoch zusätzliche 2,4 g Mercaptoethanol (Molekulargewichtsregler). Der K-Wert des resultierenden Emulsionspolymerisats betrug 35.

Dc:      Wie Da, die Monomerenzusammensetzung lautete jedoch 70 Gew.-% Methylmethacrylat und 30 Gew.-% Methacrylsäure. Der K-Wert des resultierenden Emulsionspolymerisats betrug 62.

Dd: Wie Da, die Monomerenzusammensetzung lautete jedoch 95 Gew.-% Methylmethacrylat und 5 Gew.-% Methacrylsäure. Der K-Wert des resultierenden Emulsionspolymerisats betrug 68.

De: Wie Da, die Monomerenzusammensetzung lautete jedoch

50 Gew.-% n-Butylacrylat
30 Gew.-% Methylmethacrylat und
20 Gew.-% Methacrylsäure.

Der K-Wert des resultierenden Emulsionspolymerisats betrug 63.

2. Herstellung eines Polymerisatpulvers Pa

Die wäßrige Polymerisatausgangsdispersion Da wurde in an sich bekannter Weise nach der Methode der Sprühtrocknung (Eingangstemperatur: 130°C, Ausgangstemperatur: 60°C) ohne Mitverwendung von Antiback- oder Sprühhilfsmittel zu einem feinteiligen Polymerisatpulver sprühgetrocknet.

3. Anwendungstechnische Prüfungen von mit den Polymerisatdispersionen Da bis De sowie dem Polymerisatpulver Pa modifizierten Zementmörteln

40 g Portlandzement PZ 35 wurden mit 60 g Normsand (DIN 1164 Teil 7) trocken gemischt und anschließend unter Verwendung von Wasser sowie den verschiedenen Polymerisatdispersionen bzw. dem Polymerisatpulver bei einem Polymerisat/Zement-Gewichtsverhältnis von 0,1 so angerührt, daß angerührte Mörtel einheitlicher Standfestigkeit resultierten.

Die Mörtel wurden anschließend in eine Prismenform eingefüllt und durch Vibrieren verdichtet. Anschließend wurden die Mörtelprismen in der Form 28 Tage bei 23°C und 95 % relativer Luftfeuchtigkeit gelagert. Anschließend wurden die entformten Prismen auf ihre Biegezug- und Druckfestigkeit geprüft. Die Ergebnisse zeigt die nachfolgende Tabelle. Eine verarbeitungsgerechte polymerisatfreie Mörtelzubereitung gleicher Standfestigkeit konnte nicht hergestellt werden, weshalb die Tabelle keine Werte für polymerisatfreie Mörtelzubereitungen umfaßt.

Tabelle

| Verwendetes Polymerisatsystem | Biegezugfestigkeit (N/mm$^2$) | Druckfestigkeit (N/mm$^2$) |
|---|---|---|
| Da | 15,55 | 57,6 |
| Pa | 15,95 | 60,4 |
| Db | 3,78 | 20,1 |
| Dc | 4,49 | 29,4 |
| Dd | 7,70 | 42,0 |
| De | 6,81 | 41,5 |

Die erfindungsgemäßen Systeme Da, Pa sind gegenüber den Vergleichssystemen Db bis De in unerwarteter Weise vorteilhaft.

**Patentansprüche**

1. Polymerisatpulver, deren Polymerisat in polymerisierter Form aus

60 bis 85 Gew.-%    Methylmethacrylat (Monomeres a),

15 bis 25 Gew.-%    wenigstens einer 3 bis 6 C-Atome aufweisenden α,β-monoethylenisch ungesättigten Carbonsäure (Monomere b) und

0 bis 15 Gew.-%    sonstigen copolymerisierbaren Monomeren (Monomere c)

mit der Maßgabe aufgebaut ist, daß

**EP 0 630 920 B1**

- die Zusammensetzung der Monomeren a, b und c so gewählt ist, daß nach der Beziehung von Fox für ein aus diesen Monomeren aufgebautes Polymerisat eine Glasübergangstemperatur von 70 bis 150°C resultiert und

- der K-Wert des Polymerisats, bestimmt in vollsaurer Form des Polymerisats in Dimethylformamid bei 23°C und einem Polymerisatgehalt von 0,1 Gew.-%, 45 bis 100 beträgt.

2. Polymerisatpulver nach Anspruch 1, deren Polymerisat saure Funktionen aufweisende Monomere b und/oder c in neutralisierter Form enthält.

3. Verfahren zur Herstellung von Polymerisatpulvern gemäß Anspruch 1 oder 2, dadurch gekennzeichnet, daß man die das Polymerisat konstituierenden Monomeren nach der Methode der radikalischen wäßrigen Emulsionspolymerisation polymerisiert und die resultierende wäßrige Polymerisatdispersion trocknet.

4. Mineralische Bindebaustoffe auf der Basis von Zement enthaltenden mineralischen Bindemitteln, enthaltend ein Polymerisatpulver gemäß den Ansprüchen 1 oder 2.

5. Verwendung von Polymerisatpulvern gemäß Anspruch 1 oder 2 als Additiv in mineralischen Bindebaustoffen auf der Grundlage von Zement enthaltenden mineralischen Bindemitteln.

6. Verwendung wäßriger Polymerisatdispersionen, enthaltend ein Polymerisat aufgebaut aus

60 bis 85 Gew.-% Methylmethacrylat (Monomeres a),

15 bis 25 Gew.-% wenigstens einer 3 bis 6 C-Atome aufweisenden $\alpha,\beta$-monoethylenisch ungesättigten Carbonsäure (Monomere b) und

0 bis 15 Gew.-% sonstigen copolymerisierbaren Monomeren (Monomere c)

mit der Maßgabe, daß

- die Zusammensetzung der Monomeren a, b und c so gewählt ist, daß nach der Beziehung von Fox für ein aus diesen Monomeren aufgebautes Polymerisat eine Glasübergangstemperatur von 70 bis 150°C resultiert und

- der K-Wert des Polymerisats, bestimmt in vollsaurer Form des Polymerisats in Dimethylformamid bei 23°C und einem Polymerisatgehalt von 0,1 Gew.-%, 45 bis 100 beträgt,

als Additiv in mineralischen Bindebaustoffen auf der Grundlage von Zement enthaltenden mineralischen Bindemitteln.

**Claims**

1. A polymer powder whose polymer, in polymerized form, is composed of

from 60 to 85% by weight of methyl methacrylate (monomer a),
from 15 to 25% by weight of at least one a,$\beta$-mono-ethylenically unsaturated carboxylic acid of 3 to 6 carbon atoms (monomer b) and
from 0 to 15% by weight of other copolymerizable monomers (monomer c),
with the proviso that
the composition of the monomers a, b and c is chosen so that, according to the Fox relationship for a polymer composed of these monomers, a glass transition temperature of from 70 to 150°C results and
the K value of the polymer, determined for the fully acidic form of the polymer in dimethylformamide at 23°C and at a polymer content of 0.1% by weight, is from 45 to 100.

2. A polymer powder as claimed in claim 1, the polymer of which contains monomers b and/or c having acidic functions, in neutralized form.

7

3. A process for the preparation of a polymer powder as claimed in claim 1 or 2, wherein the monomers constituting the polymer are polymerized by the free radical aqueous emulsion polymerization method and the resulting aqueous polymer dispersion is dried.

4. A mineral building material having binding properties and based on a cement-containing mineral binder, containing a polymer powder as claimed in claim 1 or 2.

5. Use of a polymer powder as claimed in claim 1 or 2 as an additive for mineral building materials having binding properties and based on cement-containing mineral binders.

6. Use of an aqueous polymer dispersion containing a polymer composed of

from 60 to 85% by weight of methyl methacrylate (monomer a),
from 15 to 25% by weight of at least one $\alpha,\beta$-mono-ethylenically unsaturated carboxylic acid of 3 to 6 carbon atoms (monomer b) and
from 0 to 15% by weight of other copolymerizable monomers (monomer c),
with the proviso that
the composition of the monomers a, b and c is chosen so that, according to the Fox relationship for a polymer composed of these monomers, a glass transition temperature of from 70 to 150°C results and
the K value of the polymer, determined for the fully acidic form of the polymer in dimethylformamide at 23°C and at a polymer content of 0.1% by weight, is from 45 to 100,
as an additive for mineral building materials having binding properties and based on cement-containing mineral binders.

**Revendications**

1. Poudre de polymère, dont le polymère se compose, sous forme polymérisée, de

60 à 85%     en poids de méthacrylate de méthyle (monomère a),
15 à 25%     en poids d'au moins un acide carboxylique à insaturation $\alpha,\beta$-monoéthylénique comportant 3 à 6 atomes de carbone (monomères b) et
0 à 15%      en poids d'autres monomères copolymérisables (monomères c)

étant spécifié que

- la composition des monomères a, b et c est choisie de sorte qu'il en résulte, d'après la relation de Fox pour un polymère composé de ces monomères, une température de transition vitreuse de 70 à 150°C, et
- la valeur K du polymère, déterminée sur la forme complètement acide du polymère, dans du diméthylformamide, à 23°C et avec une teneur en polymère de 0,1% en poids, est comprise entre 45 et 100.

2. Poudre de polymère selon la revendication 1, dont le polymère contient, sous forme neutralisée, des monomères b et/ou c présentant des fonctions acides.

3. Procédé de préparation de poudres de polymère selon la revendication 1 ou 2, caractérisé en ce que l'on polymérise les monomères constituant le polymère suivant le procédé de la polymérisation radicalaire en émulsion aqueuse et on sèche la dispersion aqueuse de polymère résultante.

4. Matériaux de construction minéraux de liaison à base de liants minéraux contenant du ciment, contenant une poudre de polymère selon la revendication 1 ou 2.

5. Utilisation de poudres de polymère selon la revendication 1 ou 2 comme additif dans des matériaux de construction minéraux de liaison à base de liants minéraux contenant du ciment.

6. Utilisation de dispersions aqueuses de polymère, contenant un polymère composé de

60 à 85%     en poids de méthacrylate de méthyle (monomère a),
15 à 25%     en poids d'au moins un acide carboxylique à insaturation $\alpha,\beta$-monoéthylénique comportant 3 à 6 atomes de carbone (monomères b) et

0 à 15%     en poids d'autres monomères copolymérisables (monomères c)

étant spécifié que

- la composition des monomères a, b et c est choisie de sorte qu'il en résulte, d'après la relation de Fox pour un polymère composé de ces monomères, une température de transition vitreuse de 70 à 150°C, et
- la valeur K du polymère, déterminée sur la forme complètement acide du polymère, dans du diméthylformamide, à 23°C et avec une teneur en polymère de 0,1% en poids, est comprise entre 45 et 100,

comme additif dans des matériaux de construction minéraux de liaison à base de liants minéraux contenant du ciment.